# NEW EUROPEAN PATENT SPECIFICATION

(11) **EP 2 794 771 B2**
(45) Date of publication and mention of the opposition decision: **21.05.2025**
(45) Mention of the grant of the patent: 23.11.2016
(21) Application number: 11805016.0
(22) Date of filing: 21.12.2011
(51) Int. Cl.: C09D 5/08

(54) **CORROSION RESISTANT EQUIPMENT FOR OIL AND/OR GAS APPLICATIONS**
KORROSIONSBESTÄNDIGES INSTRUMENTARIUM FÜR ÖL- UND/ODER GASANWENDUNGEN
MATÉRIEL RÉSISTANT À LA CORROSION POUR DES APPLICATIONS DE PÉTROLE ET/OU DE GAZ

(43) Date of publication of application: 29.10.2014
(73) Proprietor: Tenaris Connections B.V., 1019 GM Amsterdam (NL)
(72) Inventor: PÉREZ, Teresa, Buenos Aires (AR); BELLINGARDI, Maurizio, I-24044 Bergamo (IT); BORTOT, Paolo, I-24044 Bergamo (IT); ESPIN, Douglas, 66130 Saarbrücken (DE); BECKER-WILLINGER, Carsten, 66130 Saarbrücken (DE); HOLLMANN, Frank, 86485 Biberach (DE); JOCHUM, Marlon, 66646 Marpingen (DE); OPSÖLDER, Michael, 66117 Saarbrücken (DE); SCHMITZ-STÖWE, Sabine, 66119 Saarbrücken (DE)
(74) Representative: August Debouzy
(86) International application number: PCT/EP2011/073571
(87) International publication number: WO 2013/091686

(56) References cited:
- EP-A1- 2 532 626
- WO-A1-2005/007763
- WO-A2-2006/066825
- WO-A2-96/11981
- CN-A- 101 698 773
- CN-A- 102 190 940
- CN-A- 102 190 940
- DE-A1- 102005 040 735
- GB-A- 1 141 355
- GB-A- 1 269 522
- JP-A- 2011 157 246
- US-A- 4 695 598
- US-A- 5 436 077
- US-A- 5 749 946
- US-A1- 2006 079 410
- US-A1- 2006 079 410
- P. A. SØRENSEN ET AL: "Anticorrosive coatings: a review", J. COAT. TECHNOL. RES., vol. 6, no. 2, 2009, pages 135 - 176, XP055414293
- "Zinc-Rich Primers with Micaceous Iron Oxide", PAINT & COATING INDUSTRY (PCI), 28 April 2004 (2004-04-28), XP055414295
- "Dulux ® Protective Coatings ''PC TECH NOTES", DULUX PROTECTIVE COATINGS TECHNICAL INFORMATION AND ADVICE, September 2009 (2009-09-01), pages 1 - 3, XP055414307
- GUNTER BUXBAUM: "Industrial Inorganic Pigments", 2005, article GUNTER BUXBAUM ET AL., pages: 242 - 249, XP055414317
- Effect of the rheology additive
- Effect of the fluorine-containing polymer
- “The preparation of polymeric and cyclic urethanes and ureas from ethylene carbonate and amines" dated August 13,1956
- Press release - “New Problem Solvers from BYK-Chemie - Wesel, January 12, 2005
- Product Guide L-G 1 “Paint Additives” - February 2009
- Product News “Fluorolink ® D10H and Fluorolink ® E10 HPFPE : Innovative Additives from Solvay Solexis for improving the performance of polymeric materials - August 28, 2009
- Fluorolink Polymer Modifiers - Product Data Sheet from Solvay Solexis - December 13, 2002

## Description

The invention relates to equipment for oil and/or gas drilling, completion, storage and transportation, including pressure vessels, tools, pipes, tubes, connections and any otherparts, coated with highly structured composite material. Due to its highly structured composition coating such equipment is protected against attack by corrosive substances such as hydrogen sulfide, carbon dioxide and sea water, if necessary under hydrothermal conditions. At the same time the coating is also abrasion stable, for example against a grinding effect by sand, as well as resistant to the impact of mechanical load e. g. by tools.

### INTRODUCTION

Structures manufactured from corroding materials generally require a suitable corrosion protection to ensure the stability of the overall design structure over a long period of time. In particular, surface coatings with a good adhesion to the surface and a strong barrier effect are used in these applications. For the purpose of a durable and more versatile use, suitable corrosion protection coatings advantageously should be abrasion and hydrolysis stable and have good mechanical stability. Especially in the oil and gas industries steel is widely used as material for casing and feed pipes, which are placed deep into the rock of the borehole. Steel is used because of its good temperature resistance and excellent mechanical properties with respect to stiffness and certain abrasion resistance. In a number of wells not only sand containing oil, temperature and pressure are factors that act on the steel, but there is also a considerable amount of corrosive substances. These include, in addition to formation and injection water with high salt content, which generally leads to corrosion (red rust), especially hydrogen sulfide and carbon dioxide, which act on the steel under hydro-thermal conditions in the hole and cause sustainable damage. Continued exposure to hydrogen sulfide leads to embrittlement (sulfide stress cracking) and / or sour corrosion of the steel. Carbon dioxide causes surface corrosion with the formation of iron carbonate, which can be easily rubbed off by the entrained sand in the oil-sea water mixture (sweet corrosion). These mechanisms lead to brittle failure or loss of solid mass of steel respectively. This can cause that the pipe becomes unusable and should be replaced. The replacement causes a complete halt of production and leads to heavy financial losses and possible accidents. In practice, one encounters this problem by using high-chromium-containing steels and other expensive alloys. The use of such materials is actually economically viable only in specific cases. Carbon-steels with a suitable protective layer in this context could lead to a significant cost reduction. It is essential that the coating in addition to corrosion protection, meets all other requirements for abrasion resistance, temperature resistance and impact resistance.

### DESCRIPTION OF RELATED ART

In order to protect corroding metals for example such as steel against the effects of hydrogen sulfide, carbon dioxide and formation and injection water with high salt content under hydrothermal conditions, the application of a surface coating with a very good diffusion barrier to small gas molecules is required. For the hydrogen sulfide the damaging effect starts already at low concentrations. It may be advisable to also provide additionally an absorber in order to achieve maximum long-term effect. Inorganic materials such as ceramics or glasses are structurally impermeable to gases.

Coppe / UFRJ (WO 2004/022806 A1) claims layers of niobium oxide applied via thermal spraying to protect steel against H₂S - attack. Due to their purely inorganic ceramic nature these layers are brittle and may be prone to cracking if the coated steel components are bended, losing the good intrinsic barrier effect again.

To circumvent the problem of brittleness and to open up the possibility to coat three dimensional internal surfaces homogeneously, polymer-based coatings were used. Amorphous and semi-crystalline polymers are due to their structure not completely gastight, but can be applied by wet chemical processes on surfaces such as by painting. The matrices used are usually selected from the class of thermosetting materials because they adhere well to metals and are among the more gastight polymers. By the formation of composite materials with inorganic fillers one tries to improve the barrier effect on the one hand and other to provide additional absorber properties.

Nippon Steel Corp. (JP S54-011938 A) describes a protective layer against H₂S based on epoxy-polyurea resin and lead powder. The hydrogen sulfide is absorbed by reaction with the lead during diffusion to the metal surface. The disadvantage here is the use of polluting heavy metals for corrosion protection. Further, the lead powder is coarse microscale and interferes at high concentrations the network structure of epoxy resin matrix, resulting in loss of barrier effect.

BASF Company (WO 2006/079643 A1) claims protective layers with intrinsic inhibitory function in the context of H₂S based on polymer matrices with nitrile and thioamide functions. Similar concepts have been pursued by Universal Oil Products (U.S. 3,705,109) using carboxyl group-containing matrices or Rossijskij KHIM (RU 2083621) using ketimines and 2,4,6-tris (dimethyl-aminopropyl) phenol as a scavenger. The disadvantage here is the lack of abrasion resistance.

Schlumberger Canada Ltd. (US 2009/0277625 A1) claims compositions of a thermoplastic resin, a thermosetting resin and at least one component that can interact with H₂S. This component is an amine group-containing polymer which is applied on the surface of silica particles. Also, this composition does not show increased abrasion resistance.

Beside an active absorber function to hydrogen sulfide the effect of corrosive gas molecules on the metal surface can be reduced by delaying the diffusion of these gas molecules by a tile-like arrangement of flake-shaped particles. This elongates the diffusion path of the gas molecules and is called the geometric approach according to the Nielsen model.

In such layers the content of filler as well as the aspect ratio, the ratio between length and thickness, of the platelet-shaped particles is of crucial importance for the barrier effect. The thinner and longer the plates are, the higher the barrier effect. To achieve a significant effect, the aspect ratio should be at least greater than 10. The aspect ratio of such a particle is defined as the ratio of the average length measurement value, which corresponds to the average diameter here, to the average thickness measurement value. Such values can be measured by TEM.

Nippon Paint Co. Ltd. (JP S62-050368 A) uses a composite based on epoxy-phenolic resins in combination with platelets of metallic nickel. These approaches use first, the barrier effect of the crosslinked resin matrix and second the active function of H₂S immobilization of metallic nickel.

Similar systems are claimed by Henkel (DE 10 2006 062 500 A1) for coating metal surfaces. However, these systems are based on the use of aluminum flakes and are not intended for use against H₂S. The aluminum flakes are used instead of generating an electrical conductivity and weldability of the coatings. They are oriented randomly in the resin matrix. The application refers to the coil coating process and the replacement of a zinc coating. An influence on the barrier effect is not described.

Nanosolar Inc. (WO 2005/044551 A1) claims an inorganic-organic hybrid nano-laminate barrier layer. The nanoscale phases contained in the coating are formed in situ by the sol-gel process from molecular precursors. The result is a quasi-interpenetrating network system. A special effect on H₂S is not described.

Eckart GmbH claims an inkjet ink containing aluminum and pearlescent effect pigments in polymer matrix (DE 10 2009 037 323 A1) and an inkjet ink containing pearlescent pigments based on fine and thin substrates in a radiation cured matrix (DE 102 009 031 266 A1), each using a polymeric waxy antisettling agent for platelet. This is necessary because the ink-jet printing ink is heavily diluted with solvent and the polymer binder is used in significant lower than stoichiometric amounts compared to the effect pigments. Such compositions have no relevance for anti-corrosion applications.

Plastlac (DE 603 19 674 T2) takes a similar approach to generate a UV-curable acrylic paint containing lamellar pearlescent pigments in particular for coating plastics. Here, too, polymer-based wax dispersions for orienting the platelet fillers are claimed to enhance the desired optical effects.

All the latter three approaches describe a visual and decorative effect and its improvement through alignment of the platelets. None of the above three describes an application in the field of corrosion protection.

Siemens Power Generation (WO 2006/007385 A1) claims composites of highly structured resin systems with fillers of high thermal conductivity, wherein the highly structured resin systems include liquid crystal polymers, interpenetrating networks, dendrimers, star polymers, ladder polymers, expanding polymers or structured organic-inorganic hybrids. The high structure of the resulting composite and the high orientation of the fillers with high thermal conductivity and high aspect ratio are determined by the mesostructure of the polymer matrix and lead to composites with high thermal conductivity. By the mesostructure of the matrix a close sequence between the polymer structures and the thermally conductive particles is achieved, which leads to good contact between the two phases and thus leads to thermal conductivity at an optimal level. A barrier effect against diffusion of small molecules and corrosion protection are not described.

EP 1 718 690 A1 describes low-energy abrasion resistant coatings with increased alkali resistance. The material composition comprises a curable organic binder system; at least one functionalized fluorine-containing polymer or oligomer which is reactive with the binder, and inorganic particles.
From the matrix no cross-linking to the particles used is formed. The inorganic particles are mixed with the polymer matrix only physically. There is no phase connection, so that the particles are not included as additional network points in the resulting composite, which weakens the material in particularly with respect to their barrier properties against water vapour and gas molecules. In addition, the functionalized fluorine component cannot be effectively integrated into the matrix if binder systems with low reactivity are used. The consequence is the occurrence of micro-phase separation of fluorine component, resulting in poor adhesion to the substrate and extender function with respect to the matrix. A corrosion-protective effect and a diffusion barrier effect are not described in the application.

### PROBLEM

The object of the present invention to provide an equipment for oil and/or gas drilling, completion, storage and transportation, including pressure vessels, tools, pipes, tubes, connections and any other parts, coated with a coating, which can protect the corroding metal substrates of the equipment (substrates which are prone to corrosion) and shows excellent adhesion to the substrates with excellent abrasion, wear resistance, flexible and impact resistance combined with a high barrier function against the diffusion of water vapour and corroding gases, and media and optionally a repellent effect against hydrophilic and oleophilic substances.

### SOLUTION

The invention solves the task by an equipment for oil and/or gas drilling, completion, storage and transportation, including pressure vessels, tools, pipes, tubes, connections and any other parts, coated with a coating comprising a highly structured composite material, which protects corroding metal substrates by excellent adhesion to the substrate and effective barrier against a particularly corrosive attack by hydrogen sulfide, carbon dioxide and formation and injection water with high salt content under hydrothermal conditions (elevated pressure and temperature).

This aim is achieved by the inventions as claimed in the independent claims. Advantageous embodiments are described in the dependent claims.

Even if no multiple back-referenced claims are drawn, all reasonable combinations of the features in the claims shall be disclosed.

The problem is solved by an equipment for oil and/or gas drilling, completion, storage and transportation, including pressure vessels, tools, pipes, tubes and parts, coated with a coating as a barrier against gaseous or liquid corrosive environments comprising
a) a cured binder comprising at least one cured cross-linkable resin chosen from polyepoxides, phenolic resin, phenoxy resin, aminoplast resin, polyurethane resin and/or acrylic resin, wherein the resin comprises at least one polar group, comprising hetero atoms selected from the group including nitrogen, oxygen, sulfur and phosphorus;
b) at least one type of hydrophilic flakes with with an aspect ratio of more than 10, wherein the surface of the flakes at least partially comprises a metal oxide,
wherein the coating further comprises a fluorine-containing polymer or oligomer.

The main feature of the equipment for oil and/or gas drilling, completion, storage and transportation, including pressure vessels, tools, pipes, tubes, connections and any other parts, of the invention is its coating with a highly structured composite structure, which is proposed to be responsible for the excellent barrier properties and good adhesion to the corroding material substrate combined with abrasion and hydrolysis resistance.

### DETAILED DESCRIPTION OF THE INVENTION

The interaction of the polar group of the binder and the flakes (hydrophilic by the metal oxide coating) leads to a uniform distribution of the flakes in the coating. The distribution function of the flakes within the coating is better, the smoother and more even the flake carrier substrates for the metal oxides are, because such entanglement between the particles during application and drying process is minimized.

The cured binder comprises at least one cross-linked resin, wherein the resin comprises at least one polar group. A resin can be a monomer, oligomer or polymer before cross-linking.

A polar group can be any group comprising a dipole moment. Preferably polar groups, that can form complexes with the metal oxide surface, preferably transition metal oxide surfaces. These groups are groups containing hetero atoms such as nitrogen, oxygen, sulfur, phosphorus atoms.

A polar group having such hetero atom may for example be hydroxyl, alkoxysilyl, epoxy, carboxyl, ester, carbonyl, oxycarbonyl, sulfide, disulfide, sulfonyl, sulfinyl, thiol, thiocarbonyl, imino, amino, nitrile, ammonium, imide, amide, hydrazo, azo, diazo, cyanide, guanidine, oxygen-containing heterocyclic, nitrogen-containing heterocyclic, sulfur-containing heterocyclic groups and the like.

Among those polar groups, hydroxyl, alkoxysilyl, epoxy, carboxyl, sulfide, sulfonyl, thiol, amino, cyanide, nitrogen-containing heterocyclic groups and the like are preferred.

Those more preferred are hydroxyl, alkoxysilyl, epoxy, carboxyl, amino, nitrogen-containing heterocyclic groups, and the like, with those preferred particularly being hydroxyl and amino groups.
The polar group may be the functional group of the resin, through which resin was cured. It may also be an additional or separate group.
Possible resins are cured polyepoxides. The polyepoxides may be either saturated or unsaturated, and may be aliphatic, cycloaliphatic, aromatic or heterocyclic. They may also contain substituents which do not cause any interfering side-reactions under the reaction conditions, for example alkyl or aryl substituents, ether groups and the like.

These epoxide compounds are preferably polyglycidyl ethers based on polyhydric, preferably dihydric, alcohols, phenols, hydrogenation products of these phenols and/or novolaks (reaction products of mono- or polyhydric phenols with aldehydes, in particular formaldehyde, in the presence of acidic catalysts). The epoxide equivalent weights of these epoxide compounds (epoxy resins) are between 100 and 5000, preferably between 160 and 4000. Examples of polyhydric phenols are: resorcinol, hydroquinone, 2,2-bis(4-hydroxyphenyl)propane (bisphenol A), isomer mixtures of dihydroxydiphenylmethane (bisphenol-F), tetrabromobisphenol A, 4,4'-dihydroxydiphenylcyclohexane, 4,4'-dihydroxy-3,3'-dimethyldiphenylpropane, 4,4'-dihydroxybiphenyl, 4,4'-dihydroxybenzophenone, 1,1-bis(4-hydroxyphenyl)ethane, 1,1-bis(4hydroxyphenyl)isobutane, 2,2-bis(4-hydroxy-tert-butylphenyl)propane, bis(2-hydroxynaphthyl)methane, 1,5dihydroxynaphthalene, tris(4-hydroxyphenyl)methane, bis(4-hydroxyphenyl) ether, bis(4-hydroxyphenyl) sulfone etc. and the products of chlorination and bromination of the abovementioned compounds. Bisphenol A and bisphenol F are particularly preferred in this respect.

Also suitable are the polyglycidyl ethers of polyhydric alcohols. Examples of such polyhydric alcohols are ethylene glycol, diethylene glycol, triethylene glycol, 1,2-propylene glycol, polyoxypropylene glycols (n=1-10), 1,3-propylene glycol, 1,4-butylene glycol, 1,5-pentanediol, 1,6-hexanediol, 1,2,6-hexanetriol, glycerol and 2,2-bis(4-hydroxycyclohexyl)propane.

Polyglycidyl esters of polycarboxylic acids can also be used, which are obtained by reacting epichlorohydrin or similar epoxy compounds with an aliphatic, cycloaliphatic or aromatic polycarboxylic acid, such as oxalic acid, succinic acid, adipic acid, glutaric acid, phthalic acid, terephthalic acid, hexahydrophthalic acid, 2,6-napthalenedicarboxylic acid and dimerized linolenic acid. Examples are diglycidyl adipate, diglycidyl phthalate and diglycidyl hexahydrophthalate.

These polyepoxide compounds can also be present in mixtures with one another and, if appropriate, in mixtures with monoepoxides. Examples of suitable monoepoxides are: epoxidized monounsaturated hydrocarbons (butylene oxide, cyclohexene oxide, styrene oxide), epoxide ethers of monohydric phenols (phenol, cresol and other o- or p-substituted phenols), and glycidyl esters of saturated and unsaturated carboxylic acids.

Further suitable epoxides for the reaction are those containing amide or urethane groups, for example triglycidyl isocyanurate or glycidyl-blocked hexamethylene diisocyanate.

Further suitable epoxide compounds for the resin are derived from unsaturated fatty acids, for example from linoleic acids or linolenic acids. Examples of suitable epoxidized fatty acid derivatives are those from linseed oil, soya bean oil, alkyl esters of ricinene fatty acid, soya bean oil or linoleic fatty acid, oleic or arachidonic acid, and oligomeric fatty acids and their esters, and epoxidized alkyl esters having two or more ester groups are also suitable. Epoxidized linseed oil and soya bean oil are preferred.

Mixtures of the epoxides stated can likewise be employed. A precondition for all epoxides which can be employed within the scope of the present invention, where they have not been completely or partly reacted with monocarboxylic acids, is that they contain polar groups.

Provided they contain a sufficient number of polar groups, the polyepoxide compounds can be employed as such; however, it is often advantageous to react some of the reactive epoxide groups with a modifying material in order to achieve free polar hydroxyl groups.

Plasticized epoxy resins with terminal epoxy groups are particularly preferred, which are prepared by partial reaction of the epoxy groups of epoxy resins containing at least two epoxy groups with OH- and COOH-containing substances, such as polyhydric alcohols, for example the abovementioned diols or phenols, polycarboxylic acids or polyesters containing carboxyl or OH groups, or by reaction with polyamines.

Possible epoxides containing hydroxyl groups are also reaction products of compounds having at least two 1,2-epoxide groups per molecule and epoxide equivalent weights of from 160 to 600, and aromatic dicarboxylic acids or mixtures thereof with compounds from the group comprising (cyclo)aliphatic dicarboxylic acids, monocarboxylic acids and/or monohydric phenols, and optionally cyclic anhydrides. Products of this type are described in EP 0 387 692 A2, to which reference is made here. For the preparation of these reaction products it is possible to use all the epoxy compounds mentioned in the introduction.

The binder may also comprise a cured phenolic resin. Suitable phenolic resins are for example reaction products of monohydric or polyhydric phenols with an aldehyde. Typical examples are resins prepared from phenol, resorcinol, o-, m- or p-cresol, xylenol, para-tertiarybutyl phenol, nitrophenol or 2,2-bis(4-hydroxyphenol) propane condensed with formaldehyde, acetaldehyde or propionaldehyde.

Preferred phenolic resins are polyalkylol phenols wherein the phenolic functionality has been at least partially etherified with e.g. methyl, ethyl or butyl groups.

The binder may also comprise a phenoxy resin. Phenoxy resins, sometimes referred to herein as "thermoplastic polyhydroxyethers," are known in the art as components of corrosion-resistant coatings. "Phenoxy resins" is the generic term used to describe the amorphous, high-molecular-weight poly(hydroxy ethers) derived from diphenols and epichlorohydrin. Phenoxy resins useful in this invention are the high molecular weight reaction products of Bisphenol A and epichlorohydrin. Such poly(hydroxy ether) reaction products have molecular weights which range from about 6000 to about 85000.

Phenoxy resin provides a high molecular weight thermoplastic copolymer having good adhesive properties, dimensional stability, and good resistance to many acids, alkalies, and aliphatic hydrocarbons. Phenoxy resins are usually derived from the same materials as epoxy resins, but phenoxy resins do not have epoxy groups on their molecular chains. Phenoxy resins do have hydroxyl groups on their molecular chains; these hydroxyl groups enable cross-linking (curing) with isocyanates, anhydrides, triazines, and melamines. Phenoxies are copolymers that are usually derived from bisphenol A and epichlorohydrin and have the repeating structural formula

-[OC₆H₄C(CH₃)₂C₆H₄OCH₂CH(OH)CH₂]ₙ-. (I)

In preferred embodiments of the phenoxy resin, "n" in the above structural formula (Formula I) is from about 35 to about 120. The phenoxy accordingly has a molecular weight of from about 10000 to about 35000.

Preferred resins are resin of the epichlorohydrin-bisphenol A type, for example available under the trademark Beckopox from Cytec). Preferred resins show an epoxide equivalent weight between 1500 and 2500.

The aminoplast resins useful in this invention are the well known reaction products of urea and triazine compounds with aldehydes further etherified with alcohols. Such resins include those derived from urea, thiourea, ethylene urea, melamine, benzoguanamine and acetoguanamine. The aldehydes used in the reaction with the urea and triazine are 1 to 8 carbon aldehydes, e.g., formaldehyde and the formaldehyde forming compounds, trioxane and paraformaldehyde, acetaldehyde, propionaldehyde and butyraldehyde. Alcohols which are used to alkylate or etherify the urea and triazine-aldehyde reaction products are 1 to 8 carbon monohydric alcohol, e.g., methyl alcohol, isopropyl alcohol, butyl alcohol and 2-ethylhexyl alcohol. Examples for aminoplast resins for use in this invention are butylated urea-formaldehyde resins, methylated and butylated melamine-formaldehyde and benzoguanamine-formaldehyde resins.

The binder may also comprise a cured polyurethane resin derived from polyisocyanates. The polyisocyanate may have two or more isocyanate groups. It may, for example, be aliphatic, alicyclic, aromatic or heterocyclic, monocyclic or polycyclic. It is possible to use customary polyisocyanates, for example monomeric polyisocyanates, polyisocyanate adducts, so-called modified polyisocyanates or mixtures thereof. These are known to those skilled in the art and are commercially available. The adducts may, for example, have a mean NCO functionality of from 2 to 6, preferably from 2.4 to 4. The polyisocyanate adducts are, for example, those which find use typically as hardeners for two-component urethane coating systems. Examples of suitable polyisocyanates are the diisocyanates known from polyurethane chemistry, for example 1,3-diisocyanatobenzene, 2,4- and 2,6-tolylene diisocyanate (TDI), 1,6-hexamethylene diisocyanate (HMDI), 4,4'- and 2,4'diphenylmethane diisocyanate (MDI), naphthylene diisocyanate, xylylene diisocyanate, isophorone dissocyanate, paraphenyl diisocyanates, dicyclohexylmethane diisocyanate, cyclohexyl diisocyanate, polymethylpolyphenyl isocyanate, 1,6-dodecamethylene diisocyanate, 1,4-bis(isocyanatocyclohexyl)methane, pentamethylene diisocyanate, trimethylene diisocyanate, triphenylmethane diisocyanate, and the higher molecular weight polyisocyanates derived from these diisocyanates, for example based on isocyanurate, uretdione, allophanate and biuret. The isocyanates are obtainable, for example, under the trade names Desmodur(R) and Baymidur(R) (from Bayer) CARADATE(R) (from Shell), TEDIMON(R) (from Enichem) and LUPRANAT(R) (from BASF). Examples of monomeric polyisocyanates having more than two isocyanate groups are, for example, 4-isocyanatomethyl-1,8-octane diisocyanate and aromatic polyisocyanates such as 4,4',4"-triphenylmethane triisocyanate or polyphenolpolymethylene polyisocyanates.

The polyisocyanate can be used in blocked form in order to prevent an uncontrolled, rapid reaction from setting in, and become active only after deblocking, for example by heating. The blocking of isocyanates is a process known to those skilled in the art for reversibly lowering the reactivity of isocyanates. To block the isocyanates, all common blocking agents are useful, for example acetone oxime, cyclohexanone oxime, methyl ethyl ketoxime, acetophenone oxime, benzophenone oxime, 3,5-dimethylpyrazole, 1,2,4-triazole, ethyl malonate, ethyl acetate, ε-caprolactam, phenol or ethanol.

The polyol component used for the curing may be pure di-, tri-or polyalcohols, for example ethylene glycol, trimethylolpropane, or partially hydrolyzed fatty acid glycerides. However, these are commonly used only as the starting basis for higher molecular weight polyhydroxyl compounds. These may be, for example, more or less highly branched polyester polyols (Desmophen(R) types) formed with dicarboxylic acids or polyether polyols formed by addition of epoxides (Desmophen U(R) types). Other examples are hydroxy-functional acrylic resins (Desmophen A(R) types).

Polyurethane resin coating materials can be formed from the polyisocyanates and the polyols. Of course, in particular in the case of unblocked polyisocyanates, it may be necessary to mix the components with one another only shortly before use. Polyisocyanates may also be reacted with compounds having other functional groups which contain active hydrogen. Examples of these groups are thiol groups (-SH), primary or secondary amino groups (-NHR' where R' may, for example, be H, alkyl, cycloalkyl, aryl and corresponding aralkyl and alkaryl groups) or carboxyl groups (-COOH). The reaction products formed in the reaction with isocyanates are urethanes (in the case of hydroxyl and carboxyl), thiourethanes (in the case of thiol) or ureas (in the case of amine).

The binder may also comprise cured acrylic resins, which comprise at least one polar group. Such resins can either comprise monomers comprising at least one polar group or may comprise co-polymers of (meth)acrylic monomers with one or more ethylenic monomers comprising at least one polar group. Examples for (meth)acrylic monomers hydroxymethyl(meth)acrylat, hydroxyl-ethyl(meth)acrylate (HEA, HEMA), Hydroxypropyl(meth)acrylate (HPA, HPMA), hydroxybutyl(meth)acrylat (HBA, HBMA), 2(2-Ethoxy-ethoxy)ethyl(meth)acrylat, 2-Phenoxyethyl(meth)acrylate, Caprolacton(meth)-acrylate (HO-(CH₂)₅COO-(CH₂)₅COOCH₂CH₂CH=CH₂), methoxypolyethylenglycolmono(meth)acrylate, polypropylenglycolmono(meth)acrylat, poly-ethylenglycolmono(meth)acrylat, tetrahydrofurfuryl(meth)acrylate, furfuryl(meth)-acrylat, 1,3-butylenglycoldi(meth)acrylate, 1,4-butandioldi(meth)acrylate, diethylenglycoldi(meth)acrylate, dipropylenglycoldi(meth)acrylate, ethoxylated Bisphenol-A-di(meth)acrylate, trimethylolpropantri(meth)acrylat, ethylenglycolmonoacetoacetatmono(meth)acrylate, dimethylamino-(2-)-ethyl-(meth)acrylate, tetraethylenglycol(meth)acrylate.

As ethylenic monomers allylic alcohol or propoxylated allylic alcohol can be present.

In a preferred embodiment the cured binder comprises a mixture of epoxide resins and phenolic resins and/or phenoxy resins.

For a typical coating 40 to 98 wt.-% of binder is present, preferably 40 to 95 wt.-%, more preferably 50 to 95 wt.-%.

All wt.-% of the coating in this specification are calculated with respect of all components of the coating without the organic solvent.

If a mixture of epoxy resins and phenolic resins and/or phenoxy resins (the phenolic and phenoxy resins added) is present, the preferred ratio is between 10:1 to 1:1, preferably 8:1 to 2:1 (in wt.-%).

The coating further comprises at least one type of hydrophilic flakes with an aspect ratio of more than 10.

The average aspect ratio of the flakes, i.e. the ratio of the average length measurement value, which corresponds to the average diameter for such flakes, to the average thickness measurement value, is usually 10 to 200, preferably 10 to 150 and particularly preferably 10 to 100. The aspect ratio can be measured with TEM.

The surface of the flakes at least partially comprises a metal oxide, which makes the flakes hydrophilic. Therefore either the particle itself may consist out of the metal oxide (e.g. TiO₂ flakes) or a carrier substrate is at least partially covered by at least one metal oxide layer. Such layered coatings may comprise more than one layer of different compositions. For the invention only the surface layer is important.

The metal oxide on the surface is a metal oxide, which is capable of complex formation, mainly an oxide on which organic compounds with polar groups can be absorbed. In a preferred embodiment of the invention the metal oxide is a transition metal oxide, more preferably TiO₂, Fe₂O₃ or ZrO₂ or mixtures thereof.

The metal oxide surface of the flakes is very important. Using glass flakes with the same size distribution, but without a metal oxide coating, no highly structured composite coating is possible. Such a coating does not show the desired barrier properties and corrosion protection. Therefore the interface between the metal oxide and the binder is very important.

In a preferred embodiment of the invention the coated flakes used are generated by use of carrier substrates, which are available by a web coating process. The carrier flakes produced are then crushed and then fractionated. Then these flakes are coated with the metal oxide with controlled thickness by wet chemical precipitation (G. Buxbaum and G. Pfaff Industrial inorganic pigments, 3rd ed. Wiley-VCH pages 243-248; F. J. Maile et al. Progress in Organic Coating 2005, 54, 150-163) .

After filtration and drying the coated flakes are then calcinated. This leads to metal oxide layers with a closed grain structure, which is well suited for a good interface between binder and flakes.

The metal oxide layer has typically a thickness between 10 nm and 1000 nm.

In a preferred embodiment at least one of the large surfaces of the flakes are coated with the metal oxide coating, preferably both large surfaces, more preferably the whole surface of the particles is coated with the metal oxide coating.

As a carrier substrate any substrate may be chosen, that can be coated with a corresponding metal oxide coating. It may therefore be a metal, metal oxide or other inorganic material. Depending on their temperature resistance required by the coating process also organic substrates are possible. It is very important, that the flakes used have a very low variation in thickness.

In principle, the connection mechanism works even with metal oxide coated mica platelets, but the distribution of these particle types over the polymer matrix hinder the formation of the structure in some respect, as the mica flakes on their longitudinal direction considered a more pronounced variation in thickness, than the plates obtained by the web coating process. This may lead to the above-mentioned entanglement.

In a preferred embodiment the flakes are chosen from metal oxide-coated glass flakes, metal oxide-coated silicon dioxide (or mica) or metal oxide-coated alumina flakes.

The average diameter of the flakes is usually between 1 and 500 µm, preferably between 5 and 200 µm and in particular 10-150 µm. Preferred smaller flake sizes are furthermore those in the range 1-100 µm, in particular 5-60 µm and 1-15 µm. The average thickness of the flakes is between 0.1 and 5 µm and preferably 0.1 to 1 µm.

The flakes are typically present between 2 wt.-% and 60 wt.-%, preferable 2 wt.-% and 50 wt.-%, more preferable 5 wt.-% to 40 wt.-%, more preferably 5 wt.-% to 25 wt.-%.

Conventional additives which may possibly be present in the coating according to the invention are depending on the particular intended use or from the production process. The conventional coating additives such as pigments, pigment pastes, antioxidants, leveling and thickening agents, flow assistants, antifoams and/or wetting agents, fillers, catalysts, additional curing agents and additional curable compounds, solvents etc.. These additives are usually present by up to 5 wt.-%.

The coating may further comprise inorganic particles. Suitable particles are virtually all ceramic and glass systems, but also in some cases metals, semiconductors and customary fillers. They are preferably ceramic particles. Frequently, oxides, nitrides, carbides, carbonitrides, silicides or borides are used. It is also possible to use mixtures of different particles. Preference is given to using abrasive particles or hard substances. The particles may be surface-modified or - unmodified.

The particles are, for example, particles of metal including metal alloys, semimetal (e.g. B, Si and Ge) or metal compounds, in particular metal chalcogenides, more preferably the oxides and sulfides, nitrides, carbides, silicides and borides. It is possible to use one type of particles or a mixture.

Examples are (optionally hydrated) oxides such as ZnO, SiO₂, GeO₂, TiO₂, ZrO₂, CeO₂, SnO₂, Al₂O₃ (e.g. Amperit, boehmite, AlO(OH), also in the form of aluminum hydroxide), B₂O₃, La₂O₃, Fe₂O₃ (e.g. hematite), Fe₃O₄, Ta₂O₅, Nb₂O₅, V₂O₅, MoO₃ or WO₃; further chalcogenides, for example sulfides (e.g. ZnS, and Ag₂S), selenides (e.g. GaSeand ZnSe) and tellurides (e.g. ZnTe); halides such as AgCl, AgBr, Agl,; carbides such as SiC;; nitrides such as BN, AlN, Si₃N₄ and Ti₃N₄; phosphides such as GaP, Zn₃P₂; phosphates, silicates including relatively complex silicates, for example sheet silicates, talc, zirconates, aluminates, stannates and the corresponding mixed oxides (e.g. indium tin oxide (ITO), fluorine-doped tin oxide (FTO). Also useful are customary fillers, for example graphite, sulfates such as barite and gypsum, carbonates such as calcites, dolomites and chalks, sulfides such as zinc sulfide or lithopones, glass, and also oxides and silicates such as silicas, cristobalite, talc, kaolin and mica, provided that they are insoluble in the selected medium.

Preference is given to using abrasive powders for the particles. Examples of abrasive or hard powders, which are also referred to as abrasives, are powders of diamond, granite, pumice, tripel, silicon carbide, emery, aluminas, for example amperit and corundum, silicas such as Kieselguhr, quartz or abrasive sands, gypsum, boron carbide and other oxides, borides, silicides, carbides, carbonitrides and nitrides.

In one embodiment, the Mohs' hardness value of the particles is greater than 5. In certain embodiments, the Mohs' hardness value of the particles, such as silica, is greater than 6.

The particles are preferably selected from particles consisting of at least one of boron carbide, silicon carbide and / or silicon nitride.

The particle size of the particles is not particularly restricted. Appropriately, the mean particle diameter is, for example, in the range from at least 0.1 µm, preferably at least 0.5 µm and more preferably at least 1 µm up to not more than 100 µm, more preferably not more than 50 µm and particularly preferably not more than 20 or 10 µm. It is also possible to use mixtures of particles of different particle size. For example, SiC UF-10 with coarser UF-05 and even finer UF-15 can be used in combination. In addition, it is also possible to add finer particle fractions down to the nm range, as are customary, for example, in nanocomposites which are described, for example, in DE 42 12 633 A1. It is also possible to use very fine particles of such nanoscale solid particles with a mean particle diameter below 0.1 µm alone.

As in the later data too, the mean particle diameter is based on the volume average determined, the distributions being determined by using laser diffraction processes (evaluation according to Mie) in the particle size range from 1 to 2000 µm and UPA (ultrafine particle analyzer, Leeds Northrup (laser optics)) in the range from 3.5 nm to 3 µm. In the range of intersection from 1 to 3 µm, reference is made here to the measurement with UPA.

The particles used may also be surface-modified. For example, SiO₂ particles, especially quartz particles, may be surface-modified with epoxy or amino groups or other functional groups.

The modification of particle surfaces is a known process, as described for nanoscale solid particles, for example, in WO 93/21127 A1 or WO 96/31572 A1. The preparation of the surface-modified particles can in principle be carried out in two different ways, specifically firstly by modifying already prepared particles and secondly by preparing particles with use of one or more compounds which possess appropriate functional moieties.

The inorganic particles are usually present between 5 wt.-% to 30 wt.-%, preferably 10 to 25 wt.-%.

In a preferred embodiment the coating comprises not more than 40 wt.-% in flakes and inorganic particles, more preferred between 15 wt.-% to 40 wt.-% or between 20 wt.-% to 40 wt.-%.

In the invention the coating comprises a fluorine-containing polymer or oligomer. Such polymers are reactive perfluoropolyethers. The fluorine content improves the barrier properties of the cured coating against water penetration due to the hydrophobic character of the fluorine containing compound. In an embodiment, the perfluoropolyether is chemically connected with the binder, forming a plurality of covalent bonds between the perfluor- opolyether and the polymer (reactive fluorine containing oligomer or polymer). Furthermore, the perfluoropolyether may be condensed with the binder. In an embodiment, the perfluoropolyether comprises Fluorolink^{®} D1OH (Solvay Solexis). This compound may alternatively be referred to as D10H herein. In certain embodiments, about 0.01 to 2 wt.-% of the fluorine containing polymer, on the basis of the total weight of the coating may be present, preferably 0.28 to 0.5 wt.-%. In other embodiments, non-reactive fluoro-compounds may be present to accomplish this purpose.

In one preferred embodiment of the invention the coating further comprises a cross-linked co-monomer or oligomer or polymer for cross-linking the binder. This co-monomer may comprise at least one functional group, which is reactive with the curing reaction of the binder. It may as well be a different cross-linking reaction. Such a cross-linking can improve the barrier properties of the cured coating. These co-monomers may carry independent functional groups, like polar or apolar groups, or can be used to introduce halogens like fluorine groups into the coating. In a preferred embodiment of the invention the co-monomer is a reactive fluorine containing oligomer or polymer as described above.

In another embodiment of the invention the binder further comprises a co-monomer comprising at least one cyano group. This reactive group is beneficial since it can react with hydrogen sulfide. The co-monomer can be a monomer, oligomer or polymer based on a cyano-containing compound. Such a compound comprises functional groups compatible with functional groups on the resin. The compound can be polymerized with the curing reaction of the resin. It may also react only with further functional groups present in the resin. Preferably the compound acts as cross-linker, it contains more than two functional groups to react with the resin.

For epoxy resins or polyurethane resins such a compound may be compounds derived from cyanoguanidines. Such compounds can be oligomeric cyanoguanidines as dicyandiamide or monomeric cyanoguanidine.

The co-monomer in its cured form is typically present in 0.01 wt.-% to 20 wt.-%, preferably 2 wt.-% to 15 wt.-%.

The co-monomer comprising a cyano group (in its uncured form) is especially beneficial for barriers against gaseous corrosive media, preferably in combination with a fluorine containing co-monomer.

It is also possible to use a mixture of co-monomers.

In another embodiment of the invention the coating further comprises at least one rheology additive.

Such rheology additives are for example waxes capable of providing the features of anti-settling, resistance to abrasion, and orientation of the flakes may be present in the coating.

Such rheology additives may be synthetic waxes, polyethylene waxes, polytetrafluoroethylene (PTFE) waxes, high-density polyethylene waxes, polypropylene waxes, ethylene compolymers, ethylene acrylic acid (EAA) copolymers, and ethylene vinyl acetate (EVA) copolymers.

In a further embodiment of the invention the rheology additive is chosen from the group containing an ethylene copolymer and / or an ethylene acrylic acid copolymer, preferably ethylene vinyl acetate (EVA) copolymers and/or ethylene acrylic acid (EAA) copolymers.

The rheology additives are, for example ethylene vinyl acetate (EVA) copolymers.

The rheology additives may be present at 0.05 wt.-% to 5 wt.-%, preferably 1 wt.-% to 3 wt.-%.

The equipment for oil and/or gas drilling, completion, storage and transportation, including pressure vessels, tools, pipes, tubes, connections and any other parts, of the invention coated with a coating as a barrier against gaseous or liquid corrosive environments can be made from any suitable material. The equipment also includes pipes for oil and gas production and transport, recipient for gas transportation, high pressure gas cylinders.

In a further embodiment of the invention the equipment oil and/or gas drilling, completion, storage and transportation comprises at least one of casing, tubing, connectors and connections pipes or tubes used as line pipe, coiled tubing, artificial lift parts, and gas containers.

Examples of suitable equipment are substrates made of metal, or glass, ceramic liner including porous ceramics, glass ceramic or inorganic-organic composite materials liners. The substrates may be pretreated, for example by a sand blasting treatment or glass bead blasting treatment or with a preliminary coating such as a lacquer coating (lacquered surfaces), an enamel coating, a paint coating or a metalized surface, or by impregnation.

Examples of metal substrates include, for example, iron, steel and some alloys. The glass used as liners may be any conventional glass types, for example silica glass, borosilicate glass or soda-lime silicate glass. Examples of plastic substrates use as liners are polycarbonate, polymethyl methacrylate, polyacrylates, polyethylene terephthalate and Cellulose acetate (TAC).

The coating on the substrate has a thickness of typically 5 µm to 500 µm, preferably between 8 µm and 200 µm, more preferably between 8 µm and 100 µm or 8 µm and 50 µm. In a preferred embodiment the coating has a thickness between 8 µm and 40 µm.

For the coating of the equipment any suitable process may be used. Preferably a composition consisting of the uncured coating as described is mixed with a solvent and applied to the substrate by spray coating. Suitable solvents are for example aliphatic and/or aromatic solvents with a boiling point or range in the range from about 120 °C to 180 °C, such as butyl acetate or methoxypropylacetate. The solvent can be used in any suitable amount, as long as good mixing of the compounds is possible. Typically the solvent is used in the ratio of 2:1 to 1:5 of uncured binder and solvent in weight. The applied coating composition may be cured as known to the person skilled in the art.

The invention also relates to the use of a substrate coated with a coating as described previously for oil and/or gas drilling, completion, storage and transportation, including pressure vessels, tools, pipes, tubes, connections and any other parts. This may include the coating of casing, tubing, connectors and connections pipes or tubes used as line pipe, coiled tubing, artificial lift parts, and gas container.

Such substrates further include downhole tools, devices or components adapted to comprise at least part of a well completion assembly or well drilling assembly. For example, these substrates may be centralizer, casings, liners, production screens, production tubing, artificial lift parts and the like in oil or gas wells and gas storage containers.

Due to the special properties the coating is especially suited for corrosive environments, e.g. under hydrothermal conditions (elevated pressure and temperature, e.g. > 5 bar and < 200 °C).

### DETAILED SPECIFICATION FOR LIQUID AND GASEOUS CORROSIVE ENVIRONMENT

Depending on the desired properties of the coating, the composition of the coating may be optimized. For liquid corrosive environments the addition of hard particles is preferred in order to increase the abrasion resistance of the cured coating.

For such environments the coating may comprise 50 wt.-% to 98 wt.-% binder; 2 to 25 wt.-% flakes, 0 to 25 wt.-% hard particles, 0 to 0.5 wt.-% of a fluorine containing co-monomer and 0 to 3 wt.-% of a rheology additive, preferably 50 wt.-% to 93 wt.-% binder; 2 to 25 wt.-% flakes, 5 to 25 wt.-% hard particles, 0 to 0.5 wt.-% of a fluorine containing co-monomer and 0 to 3 wt.-% of a rheology additive. The cured coatings typically have a thickness between 7.5 µm and 100 µm.

In the case of gaseous corrosive environments the addition of cross-linking co-monomers like cyanoguanidine is preferred. Such compositions may not comprise any hard particles.

For such environments the coating may comprise 50 wt.-% to 98 wt.-% binder; 2 to 25 wt.-% flakes, 0 to 25 wt.-% hard particles, 0 to 0.5 wt.-% of a fluorine containing co-monomer, 0 to 20 wt.-% of a cross-linked co-monomer and 0 to 3 wt.-% of a rheology additive, preferably 50 wt.-% to 96 wt.-% binder; 2 to 25 wt.-% flakes, 0 to 25 wt.-% hard particles, 0 to 0.5 wt.-% of a fluorine containing co-monomer, 2 to 20 wt.-% of a cross-linking co-monomer and 0 to 3 wt.-% of a rheology additive. The cured coatings typically have a thickness between 15 µm and 100 µm.

The tables 1 and 2 show different results for different coating compositions with the following abbreviations: CS = Crystal Silver flakes (Merck); LS = Lapis Sunlight flakes (Merck); CTX = Ceratix 8461 (Byk); CF = Cerafak 100 (Byk); PS = P 104 S (Byk); FL = Fluorolink D10H (Solvay). The samples with labelled with H (table 1) are compositions especially for liquid environments, while the samples labelled with G (table 2) are preferred for gaseous environments. Some of the specific compositions will be presented in the example section. The samples H193, H139 are comparative examples in table 1. The samples G046, G014, G099 are comparative examples in table 2.

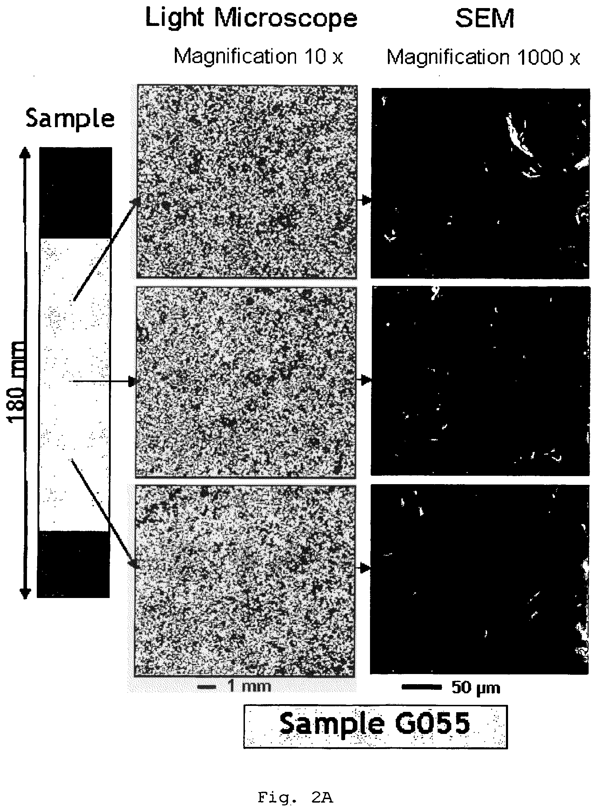

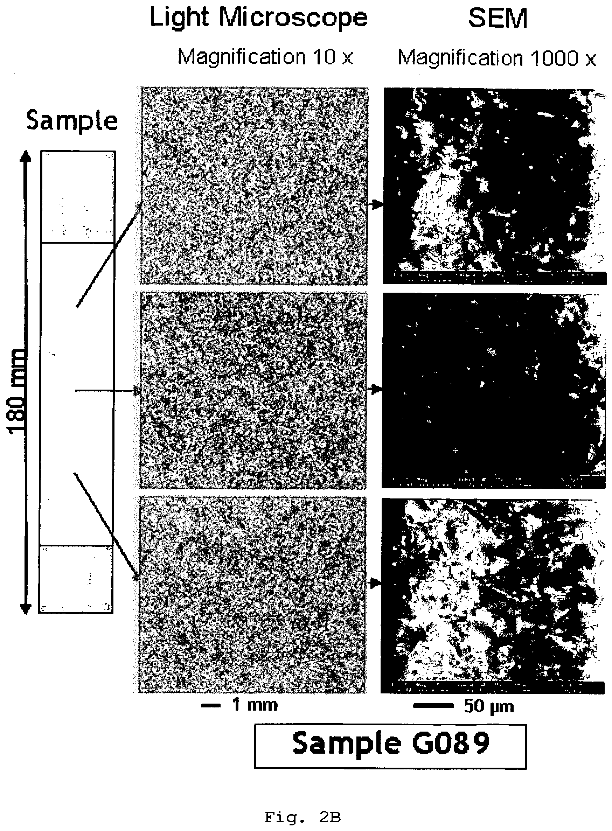

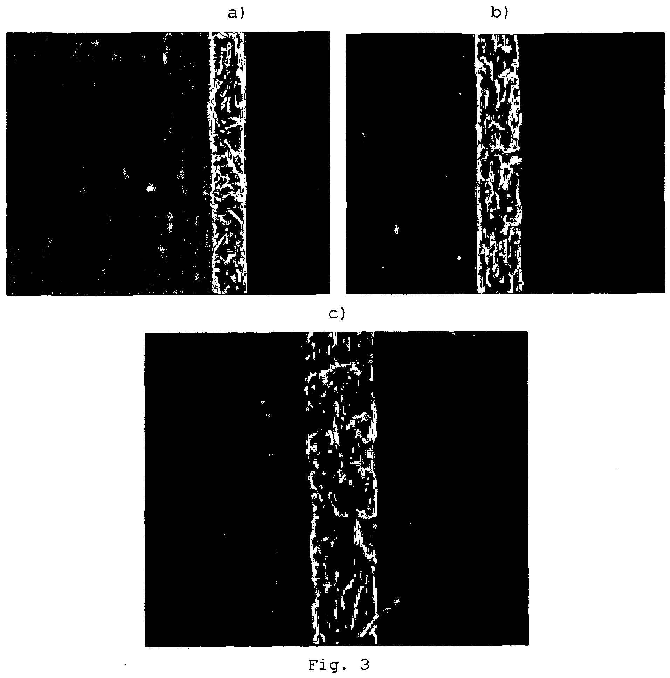

The Figures 2A and 2B show light microscope and scanning electron microscope (SEM) pictures from the surface of a sample from the different points of the coated substrate (arrows). Figure 3 shows the effect of orienting additive on the orientation of the flakes in the cured layers.

### MATERIALS AND METHODS

### Autoclave Test

Experiments for the H₂S-tests were done in a lab-scale H₂S-test-facility. The autoclave (Model LaS-4-13-MCS-J, Laborautoklav 13 1, 4 bars) with stainless steel accessories (discharge cock, safety relief valve, manometer and fittings) was provided by Adolf Wolf SANOclav, Bad Oberkingen-Hausen. The gas mixture for the tests was delivered by LINDE GAS Deutschland, Düsseldorf. It contains 10 % H₂S and 90 % CO₂. For safety aspects the test facility was build up in a lockable skeleton container.

The H₂S test was accomplished as follows: Water containing 5 wt.-% sodium chloride is put into the vessel to form the steam during the proceeding of H₂S-test. The 5x5 cm samples are mounted on a base frame and put into the vessel, so that they have no contact with the salty water (samples denoted "G") or are immersed with 50 % of their size into the salty water (samples denoted "H") on the bottom of the vessel. The lit is closed and the autoclave is now flooded with the gas mixture from the extern gas bottle up to 1.0 bar inner pressure. The vessel is now heated to 85 °C, thereby increasing the pressure in the vessel up to 1.4 bars. Corrosion time is counted from the point in time of reaching the test parameters.

After proceeding time (normally after every 14 days) the vessel is cooled down to room temperature and the gas mixture is allowed to discharge. Then the lit is opened and a certain amount of samples are removed. The rest stays in the vessel and the process is started once more like described before.

The removed samples are cleaned only with water and a brush using no other cleaning agents and towelled. They are now ready for the examination by cross cut / tape test (CC/TT). A successful sample will have to reach the 720 hrs in this test and fulfill the CC/TT test. The results are shown in table 1 and table 2.

### Cross Cut - Tape Test (CC / TT) according to DIN ISO 2409

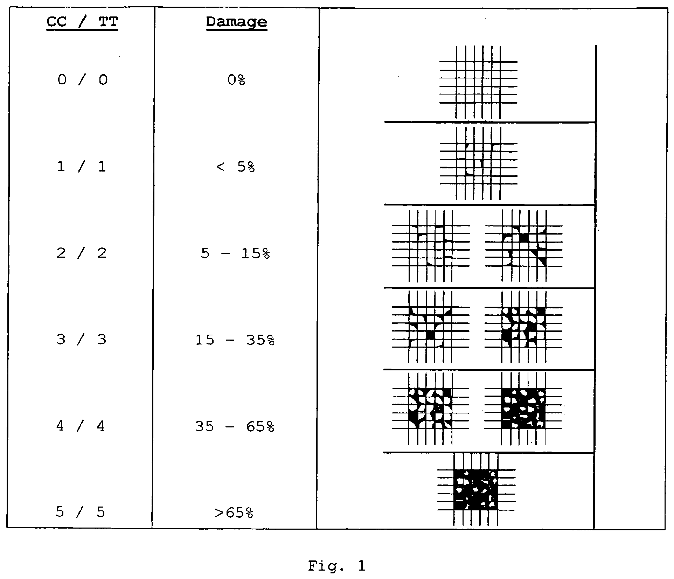

The cross cut - tape test, performed after the H₂S-test, gives information about the adhesion of coating material to the sample surface after the corrosion test. It is done on the backside of the 5x5 cm samples. A knife with 6 parallel blades (distance 1mm) is passed over the coating surface so that the coating layer is cut through. The same is done in perpendicular thus giving a cross cut. The sample is brushed after the cross cut to remove detached coating material. The remaining amount of coating on the surface is examined and judged according to a rating (see Figure 1). After that a tape is put on the surface and pulled down. Also the remaining coating is examined. All samples that show higher values than CC/TT 1/1 do not fulfill the requirement of good adhesion. "CC/TT liquid" means the part of the sample immersed into brine, "CC/TT gas" means the part of the sample in the gas phase. The results are shown in table 1 and table 2.

### Vibrational Tensile Testing (Fatigue test)

Tests were done on both side coated flat tensile specimens using an Instron testing machine which has a chamber that is cooled down with liquid N₂ to -40°C. The sample stretching was performed within a loading range from 1 to 10 kN. The used frequency was 1.0 Hz. So the required 15000 cycles were done in about 4 hours. Crack formation was investigated visually, by light microscopic and by scanning electron microscopy (SEM) as can be observed in the examples photos in Figure No. 2A and Figure No. 2B.

The requirement for a sample to fulfill the test is no crack after 15.000 cycles.
The results are given as "Fatigue test" in table 2 and as can be observed in figures 2A and 2B, there are no cracks visible.

### Taber Abrader according to DIN 53754

For this test 2 x 500 g, CS-17 rolls were used for 400 cycles. Weight loss is given in mg. Samples showing a weight loss of < 5 mg fulfill the requirement. The results are shown in table 1.

### Neutral salt spray test (SST)

This test was performed according to DIN 50021. The samples were investigated for blistering, delamination and subsurface migration. The duration of the sample is given in hours. All samples that pass the requirement of 300 hrs SST fulfill the test. The 300 hrs are based on the corrosion stability required from the US norm for submarine boats. The results are shown in table 1.

### Impact test (ball drop test)

The impact behaviour was tested by the ball drop test using a steel ball with a diameter of 10 mm loaded up to 1500 g. The falling height was chosen to be 1 m. The impact area has been inspected visually with the naked eye and with a magnification glass for delamination and cracking. The rating has been done as follows:
- I1: no damage
- I2: small scratch, sharp edge
- I3: scratch with wall
- I4: scratch with wall and cracks
- I5: 50% spalling

A successful sample will have to obtain a minimum of I2.

### Tests in environments with presence of H₂S

A low-alloyed Cr-Mo steel with different tensile strength (TS) was tested with and without a coating developed in the present invention. Tubular pieces were cut from as rolled tubes and subjected to quench and temper at different temperatures in order to achieve the desired mechanical properties.

Samples to evaluate resistance to Sulfide Stress Cracking in H₂S environments (using Tensile test Method A NACE TM0177) and performance in gas environment with H₂S presence (through slow strain rate tests).

### NACE Method A Test on G055

Longitudinal samples for NACE tests were machined from heat treated tubular pieces.

Tests were carried out according to NACE TM 0177-2005 Method A. The test solution A as reported in NACE TM0177-2005 was used in all the tests. Initial pH was 2.7 and the solution was saturated with 100% of H₂S)

Samples with and without a coating developed in the present invention were evaluated. The coating used was mixture named G055 with a thickness of 33 +/- 2 µm. Samples 1 and 2 were coated and passed the required number of hours (720 hrs), all the other uncoated samples failed. Table 3 shows the results of the NACE tests carried out.

### Cyclic slow strain rate tests on G055

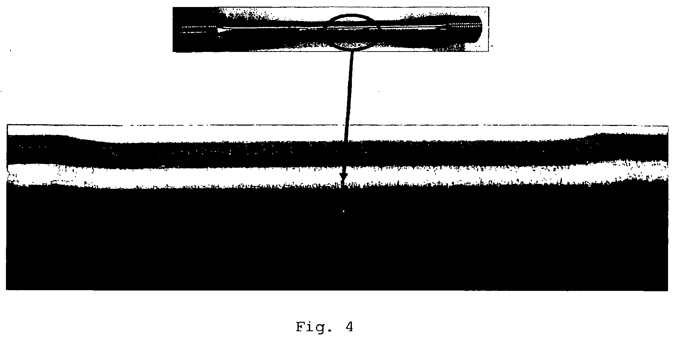

Longitudinal samples were then machined from tubular pieces. An electro-discharge machining (EDM) transversal notch was placed in the middle section of the sample (see Figure 4). Samples were fatigue tested inside an autoclave with CH₄ gas at 200 bar pressure, 4 % CO₂ and 330 ppm of H₂S with a controlled dew point to allow condensation of water vapor. Before testing, samples were pre-cracked in air in order to develop a sharp crack from the pre-existing notch. Samples 11, 12, 13 were coated with combination G055 and a thickness of 30 +/- 3 µm.

Samples were fatigue tested at different number of cycles and, at the end of the test, fatigue crack propagation was observed and measured either by metallographically polished sections or by opening the sample at liquid nitrogen temperature.

All the coated samples tested at different applied delta-stress and number of cycles show crack propagation less than 0.1 mm, while all the other uncoated samples show crack propagation from 0.2 mm up to failure of the samples. Table 4 shows the results of the cyclic slow strain rate tests.

In the following sections examples are given to illustrate the invention.

### EXAMPLES

### Example 1: Composition for liquid corrosive media H 247

10.40 g epoxy resin of epichlorohydrin-bisphenol A-type (Cytec Beckopox EP307) are dissolved in 20.80 g methoxypropyl acetate (CAS 108-65-6). To this are added 4.90 g of the phenolic resin solution Cytec Phenodur PR722/53BG/B (PR722), 0.07 g Fluorolink D10H (Comonomer 2 FL), 3.58 g BYK Ceratix 8461 (CTX) and 2.70 g Borcarbid HD20 (H.C. Starck). The mixture is ground in a bead mill (VMA Getzmann Dispermat CA with grinding system APS, zirconium oxide beads 1.2-1.4 mm). The beads are then removed and the yield is determined. At a yield of 75% 1.34 g (= 1.79 g * 75%) Merck Colorstream Lapis Sunlight T20-O4, WNT (Pigment 1) is stirred in with a dissolver disc. Application is done with a handgun SATA minijet on sand blasted steel plates (Wet film thickness of 80-100 µm), the curing takes place for 30 minutes at 200°C. This gives a green-gray, shiny, homogeneous, well adherent layer with excellent stability in the ball drop test after curing. The rating of the impact test was I2.

After the entire set of test (autoclave, SST, CC/TT, Taber abrader) were performed can be observed that this example fulfill the requirements as can be derived from table 1.

### Example 2: Composition for liquid corrosive media H 253

9.60 g Epoxy resin of epichlorohydrin-bisphenol A-type (Cytec Beckopox EP307) are dissolved in 19.20 g methoxypropyl acetate (CAS 108-65-6). To this are added 4.50 g of the phenolic resin solution Cytec Phenodur PR722/53BG/B, 0.06 g Fluorolink D10H, 3.30 g BYK Ceratix 8461 and 2.48 g Borcarbid HD20 (H.C. Starck). The mixture is ground in a bead mill (VMA Getzmann Dispermat CA with grinding system APS, zirconium oxide beads 1.2-1.4 mm). The beads are then removed and the yield is determined. At a yield of 75% 1.24 g (= 1.65 g * 75%) Merck Xirallic Crystal Silver T60-10 SW (Pigment 2) is stirred in with a dissolver disc. Application is done with a handgun SATA minijet on sand blasted steel plates (Wet film thickness of 80-100 µm), the curing takes place for 30 minutes at 200°C. This gives a green-gray, shiny, homogeneous, well adherent layer with excellent stability in the ball drop test after curing. The rating of the impact test was I2.

After the entire set of test (autoclave, SST, CC/TT, Taber abrader) were performed can be observed that this example fulfill the requirements as can be derived from table 1.

### Example 3: Composition for liquid corrosive media H 226

11.30 g Epoxy resin of epichlorohydrin-bisphenol A-type (Cytec Beckopox EP307) are dissolved in 22.60 g methoxypropyl acetate (CAS 108-65-6). To this are added 5.30 g the phenolic resin solution Cytec Phenodur PR722/53BG/B, 0.07 g Fluorolink D10H and 2.64 g Borcarbid HD20 (H.C. Starck). The mixture is ground in a bead mill (VMA Getzmann Dispermat CA with grinding system APS, Zirconium oxide beads 1.2-1.4 mm). The beads are then removed and the yield is determined. At a yield of 75% 0.66 g (= 0.88 g * 75%) Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a green-gray, shiny, homogeneous, well adherent layer with excellent stability in the ball drop test after curing. The rating of the impact test was I2.

After the entire set of test (autoclave, SST, CC/TT, Taber abrader) were performed can be observed that this example fulfill the requirements as can be derived from table 1.

### Example 4: Composition for liquid corrosive media H 232

10.40 g Epoxy resin of epichlorohydrin-bisphenol A-type (Cytec Beckopox EP307) are dissolved in 20.80 g methoxypropyl acetate (CAS 108-65-6). To this are added 4.90 g of the phenolic resin solution Cytec Phenodur PR722/53BG/B, 0.07 g Fluorolink D10H und 3.02 g Borcarbid HD20 (H.C. Starck). The mixture is ground in a bead mill (VMA Getzmann Dispermat CA with grinding system APS, zirconium oxide beads 1.2-1.4 mm). The beads are then removed and the yield is determined. At a yield of 75% 3.02 g (= 4,02 g * 75%) Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a green-gray, shiny, homogeneous, well adherent layer with excellent stability in the ball drop test after curing. The rating of the impact test was I2.

After the entire set of test (autoclave, SST, CC/TT, Taber abrader) were performed can be observed that this example fulfill the requirements as can be derived from table 1.

### Comparative example 1 (without flakes) for liquid corrosive media: H 139

12.80 g Epoxy resin of epichlorohydrin-bisphenol A-type (Cytec Beckopox EP307) are dissolved in 25.60 g methoxypropyl acetate (CAS 108-65-6). To this are added 6.00 g the phenolic resin solution Cytec Phenodur PR722/53BG/B, 0.08 g Fluorolink D10H and 5.36 g Borcarbid HD20 (H.C. Starck). The mixture is ground in a bead mill (VMA Getzmann Dispermat CA with grinding system APS, zirconium oxide beads 1.2-1.4 mm). The beads are then removed. Application is done with a handgun SATA minijet on sand blasted steel plates (Wet film thickness of 80-100 µm), the curing takes place for 30 minutes at 200°C. This gives a green-gray, shiny, homogeneous, well adherent layer with excellent stability in the ball drop test after curing. The rating of the impact test was I2.

After the entire set of test (autoclave, SST, CC/TT, Taber abrader) were performed can be observed that this example did not fulfill the requirements as can be derived from table 1. Due to SST failed.

### Example 5: Composition for gaseous corrosive media G 089

12.40 g Epoxy resin of epichlorohydrin-bisphenol A-type (Cytec Beckopox EP307) are dissolved in 24.80 g methoxypropyl acetate (CAS 108-65-6). To this are added 5.85 g the phenolic resin solution Cytec Phenodur PR722/53BG/B, 0.08 g Fluorolink D10H, 8.85 g BYK Ceratix 8461 and 2.00 g cyanoguanidine (CAS 461-58-5). The mixture is ground in a bead mill (VMA Getzmann Dispermat CA with grinding system APS, zirconium oxide beads 1.2-1.4 mm). The beads are then removed and the yield is determined. At a yield of 75% 1.50 g (= 2.00 g * 75%) Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a bright golden-green, homogeneous, well-adhering layer.

After the entire set of test (autoclave, SST, CC/TT) were performed can be observed that this example fulfill the requirements as can be derived from table 2. Also for this example the fatigue test was performed successfully (figure 2b).

### Example 6: Composition for gaseous corrosive media G 055

16.00 g Epoxy resin of epichlorohydrin-bisphenol A-type (Cytec Beckopox EP307) are dissolved in 32.50 g methoxypropyl acetate (CAS 108-65-6). To this are added 7.50 g the phenolic resin solution Cytec Phenodur PR722/53BG/B, 0.10 g Fluorolink D10H, 11.00 g BYK Ceratix 8461 and 3.00 g cyanoguanidine (CAS 461-58-5). The mixture is ground in a bead mill (VMA Getzmann Dispermat CA with grinding system APS, zirconium oxide beads 1.2-1.4 mm). The beads are then removed and the yield is determined. At a yield of 80% 4.72 g (= 5.90 g * 80%) Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a bright golden-green, homogeneous, well adherent layer.

After the entire set of test (autoclave, SST, CC/TT) were performed can be observed that this example fulfill the requirements as can be derived from table 2. Also for this example the fatigue test (figure 2a) and the tests in environments with presence of H₂S (table 3 and table 4) were performed successfully.

### Example 7: Composition for gaseous corrosive media G 053

9.60 g Epoxy resin of epichlorohydrin-bisphenol A-type (Cytec Beckopox EP307) are dissolved in 19.50 g methoxypropyl acetate (CAS 108-65-6). To this are added 4.50 g the phenolic resin solution Cytec Phenodur PR722/53BG/B, 0.06 g Fluorolink D10H, 3.60 g BYK Cerafak 100 (CFK) and 1.80 g cyanoguanidine (CAS 461-58-5). The mixture is ground in a bead mill (VMA Getzmann Dispermat CA with grinding system APS, zirconium oxide beads 1.2-1.4 mm). The beads are then removed and the yield is determined. At a yield of 75% 2.67 g (= 3,56 g * 75%) Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a bright golden-green, homogeneous, well-adhering layer.

After the entire set of test (autoclave, SST, CC/TT) were performed can be observed that this example fulfill the requirements as can be derived from table 2.

### Example 8: Composition for gaseous corrosive media G 039

13.60 g Epoxy resin of epichlorohydrin-bisphenol A-type (Cytec Beckopox EP307) are dissolved in 13.60 g methoxypropyl acetate (CAS 108-65-6). To this are added 6.40 g the phenolic resin solution Cytec Phenodur PR722/53BG/B, 0.09 g Fluorolink D10H and 5.13 g BYK Cerafak 100 (CFK). The mixture is stirred with a dissolver disc (VMA Getzmann Dispermat CA). 5.55 g Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a bright golden-green, homogeneous, well-adhering layer.

After the entire set of test (autoclave, SST, CC/TT) were performed can be observed that this example fulfill the requirements as can be derived from table 2.

### Example 9: Composition for gaseous corrosive media G 037

13.60 g Epoxy resin of epichlorohydrin-bisphenol A-type (Cytec Beckopox EP307) are dissolved in 13.60 g methoxypropyl acetate (CAS 108-65-6). To this are added 4.50 g the phenolic resin solution Cytec Phenodur PR722/53BG/B, 0.09 g Fluorolink D10H and 9.38 g BYK Ceratix 8461 (CTX). The mixture is stirred in with a dissolver disc (VMA Getzmann Dispermat CA). 6.62 g Merck Colorstream Lapis Sunlight T20-04 WNT is stirred in with a dissolver disc. Application is done with a handgun SATA minijet on sand blasted steel plates (Wet film thickness of 80-100 µm), the curing takes place for 30 minutes at 200°C. This gives a bright golden-green, homogeneous, well-adhering layer.

After the entire set of test (autoclave, SST, CC/TT) were performed can be observed that this example fulfill the requirements as can be derived from table 2.

### Example 10: Composition for gaseous corrosive media G 035

13.60 g Epoxy resin of epichlorohydrin-bisphenol A-type (Cytec Beckopox EP307) are dissolved in 27.20 g methoxypropyl acetate (CAS 108-65-6). To this are added 6.40 g the phenolic resin solution Cytec Phenodur PR722/53BG/B, 0.09 g Fluorolink D10H and 4.27 g Merck Colorstream Lapis Sunlight T20-04 WNT. The mixture is mixed with a dissolver disc (VMA Getzmann Dispermat CA). Application is done with a handgun SATA minijet on sand blasted steel plates (Wet film thickness of 80-100 µm), the curing takes place for 30 minutes at 200°C. This gives a bright golden-green, homogeneous, well-adhering layer. A cross-section view from scanning electron microscopy is shown in figure 3a.

After the entire set of test (autoclave, SST, CC/TT) were performed can be observed that this example fulfill the requirements as can be derived from table 2.

### Example 11: Composition for gaseous corrosive media G 049

9.70 g Epoxy resin of epichlorohydrin-bisphenol A-type (Cytec Beckopox EP307) are dissolved in 19.40 g methoxypropyl acetate (CAS 108-65-6). To this are added 4.50 g the phenolic resin solution Cytec Phenodur PR722/53BG/B, 0.06 g Fluorolink D10H, 6.60 g Byk Ceratix 8461 and 3.09 g Merck Colorstream Lapis Sunlight T20-04 WNT. The mixture is mixed with a dissolver disc (VMA Getzmann Dispermat CA). Application is done with a handgun SATA minijet on sand blasted steel plates (Wet film thickness of 80-100 µm), the curing takes place for 30 minutes at 200°C. This gives a bright golden-green, homogeneous, well-adhering layer. A cross-section view from scanning electron microscopy is shown in figure 3b.

After the entire set of test (autoclave, SST, CC/TT) were performed can be observed that this example fulfill the requirements as can be derived from table 2.

### Example 12: Composition for gaseous corrosive media G 048

9.70 g Epoxy resin of epichlorohydrin-bisphenol A-type (Cytec Beckopox EP307) are dissolved in 19.40 g methoxypropyl acetate (CAS 108-65-6). To this are added 4.50 g the phenolic resin solution Cytec Phenodur PR722/53BG/B, 0.06 g Fluorolink D10H, 3.60 g Byk Cerafak 100 and 3.11 g Merck Colorstream Lapis Sunlight T20-04 WNT. The mixture is mixed with a dissolver disc (VMA Getzmann Dispermat CA). Application is done with a handgun SATA minijet on sand blasted steel plates (Wet film thickness of 80-100 µm), the curing takes place for 30 minutes at 200°C. This gives a bright golden-green, homogeneous, well-adhering layer. A cross-section view from scanning electron microscopy is shown in figure 3c.

After the entire set of test (autoclave, SST, CC/TT) were performed can be observed that this example fulfill the requirements as can be derived from table 2.

### Comparative example 2 (without flakes and without co-monomer 1): for gaseous corrosive media G 046

12.20 g Epoxy resin of epichlorohydrin-bisphenol A-type (Cytec Beckopox EP307) are dissolved in 24.40 g methoxypropyl acetate (CAS 108-65-6). To this are added 5.70 g the phenolic resin solution Cytec Phenodur PR722/53BG/B and 0.08 g Fluorolink D10H. The mixture is mixed with a dissolver disc (VMA Getzmann Dispermat CA). Application is done with a handgun SATA minijet on sand blasted steel plates (Wet film thickness of 80-100 µm), the curing takes place for 30 minutes at 200°C. This gives a transparent yellow-brown, shiny, homogeneous, well-adhering layer.

After the entire set of test (autoclave, SST, CC/TT) were performed can be observed that this example did not fulfill the requirements as can be derived from table 2 in the CC/TT.

### Comparative example 3 (with glass flakes having NO metal oxide on the surface): for gaseous corrosive media G 014

13.60 g Epoxy resin of epichlorohydrin-bisphenol A-type (Cytec Beckopox EP307) are dissolved in 27.20 g methoxypropyl acetate (CAS 108-65-6). To this are added 6.40 g the phenolic resin solution Cytec Phenodur PR722/53BG/B, 0.09 g Fluorolink D10H and 1.90 g Microglas RCF 015 (Mühlmeier). The mixture is mixed with a dissolver disc (VMA Getzmann Dispermat CA). Application is done with a handgun SATA minijet on sand blasted stell plates (Wet film thickness of 80-100 µm), the curing takes place for 30 minutes at 200°C. This gives a transparent yellow-brown, shiny, homogeneous, well-adhering layer.

After the entire set of test (autoclave, SST, CC/TT) were performed can be observed that this example did not fulfill the requirements as can be derived from table 2 in the CC/TT.

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from their spirit or essential characteristics. The described embodiments are considered in all respects to be illustrative and not restrictive. The scope of the inventions is, therefore, indicated by the appended claims, rather than by the foregoing description. All changes which come within the meaning and range of equivalence of the claims are to be embraced within their scope.

### List of tables and figures

- Table 1:: The table shows different results for different coating compositions with the following abbreviations: CS = Crystal Silver flakes (Merck); LS = Lapis Sunlight flakes (Merck); CTX = Ceratix 8461 (Byk); CF = Cerafak 100 (Byk); PS = P 104 S (Byk); FL = Fluorolink D10H (Solvay). The samples with labelled with H are compositions especially for liquid environments.
- Table 2:: The table shows different results for different coating compositions with the following abbreviations: CS = Crystal Silver flakes (Merck); LS = Lapis Sunlight flakes (Merck); CTX = Ceratix 8461 (Byk); CF = Cerafak 100 (Byk); PS = P 104 S (Byk); FL = Fluorolink D10H (Solvay). The samples with labelled with G are preferred for gaseous environments.
- Table 3:: Results of NACE Method A tests. Coated samples pass the test, uncoated samples failed < 200 h (*TS: tensile strength).
- Table 4:: Results of cyclic slow strain rate tests. All the samples coated with G055 show crack propagation less than 0.1 mm, while uncoated samples show crack propagation more than 0.2 mm and also failures during tests (*TS: tensile strength)
- Figure 1:: The figure shows the rating for the Cross CuttTape Test (CC/TT) according to DIN ISO 2409
- Figure 2A:: The figure shows results from the Fatigue test for sample G055.
- Figure 2B:: The figure shows results from the Fatigue test for different sample G089.
- Figure 3:: SEM images from a cross section from different samples. From the top: a) G035 20 wt.-% Lapis Sunlight; b) G049 20 wt.-% Lapis Sunlight + 2.0 % Ceratix 8461; c) G048 20 wt.-% Lapis Sunlight + 2.3 % Cerafak 100.
- Figure 4:: Sample for cyclic slow strain rate tests with artificial transversal notch.

**Table 1**

| Sample | Flake 1 Lapis Sunlight wt.-% | Flake 2 Crystal Silver wt.-% | Borcarbide HD 20 Wt.-% | Rheo. Additive wt.-% | thickness [µm] | H₂S autoclave test | CC/TT liquid | CC/TT gas. | SST [h] | Taber Δm [mg] | EP307 wt.-% | PR722 wt.-% | Comonomer 2 FL wt.-% |
|---|---|---|---|---|---|---|---|---|---|---|---|---|---|
| H193 | - | - | - | - | 30.40 | 720h | 2/3 | 5/5 | | 6.8 | 79.60 | 19.90 | 0.50 |
| H139 | - | - | 25% HD20 | - | 7.00 | 720h | 0/0 | 0/0 | - | 1.9 | 59.70 | 14.93 | 0.38 |
| H226 | 5% LS | - | 15% HD20 | - | 7.81 | 720h | 0/0 | 0/0.5 | 408 | 2.0 | 63.68 | 15.92 | 0.40 |
| H144 | 10% LS | - | - | - | 15.46 | 720h | 0/1 | 0/2 | 672 | 7.3 | 71.64 | 17.91 | 0.45 |
| H228 | 10% LS | - | 10% HD20 | - | 7.88 | 720h | 0/0 | 0/0 | 408 | 1.5 | 63.68 | 15.92 | 0.40 |
| H229 | 10% LS | - | 15% HD20 | - | 8.37 | 720h | 0/0 | 0/0 | 576 | 1.8 | 59.70 | 14.93 | 0.38 |
| H246 | 10% LS | - | 15% HD20 | 1% CTX | 11.08 | 720h | 0/0 | 0/0 | 1008 | 3.2 | 58.90 | 14.73 | 0.38 |
| H247 | 10% LS | - | 15% HD20 | 2% CTX | 16.60 | 720h | 0/0 | 0/0 | 1008 | 3.1 | 58.10 | 14.53 | 0.38 |
| H248 | 10% LS | - | 15% HD20 | 3% CTX | 14.85 | 720h | 0/0 | 0/0 | 1008 | 3.0 | 57.30 | 14.33 | 0.38 |
| H230 | 10% LS | - | 25% HD20 | - | 9.96 | 720h | 0/0 | 0/0 | 576 | 2.5 | 51.74 | 12.94 | 0.33 |
| H232 | 20% LS | - | 15% HD20 | - | 11.68 | 720h | 0/0 | 0/0 | 1080 | 4.3 | 51.74 | 12.94 | 0.33 |
| H235 | - | 5% CS | 15% HD20 | - | 16.90 | 720h | 0/0.5 | 1/3.5 | 408 | 2.8 | 63.68 | 15.92 | 0.40 |
| H237 | - | 10% CS | 10% HD20 | - | 21.91 | 720h | 0/1.5 | 0/2.5 | 408 | 3.3 | 63.68 | 15.92 | 0.40 |
| H238 | - | 10% CS | 15% HD20 | - | 17.35 | 720h | 0/0 | 0/1.5 | 1080 | 2.8 | 59.70 | 14.93 | 0.38 |
| H252 | - | 10% CS | 15% HD20 | 1% CTX | 22.91 | 720h | 0/0 | 0/0 | 504 | 3.2 | 58.90 | 14.73 | 0.38 |
| H253 | - | 10% CS | 15% HD20 | 2% CTX | 26.21 | 720h | 0/0 | 0/1 | 1008 | 3.6 | 58.10 | 14.53 | 0.38 |
| H254 | - | 10% CS | 15% HD20 | 3% CTX | 28.30 | 720h | 0/0 | 0/1 | 840 | 3.4 | 57.30 | 14.33 | 0.38 |
| H239 | - | 10% CS | 25% HD20 | - | 58.36 | 720h | 0/1 | 0/1.5 | 1080 | 3.4 | 51.74 | 12.94 | 0.33 |
| H240 | - | 20% CS | 10% HD20 | - | 16.09 | 720h | 0/0 | 0/0 | 1080 | 4.0 | 55.72 | 13.93 | 0.35 |
| H241 | - | 20% CS | 15% HD20 | - | 19.12 | 720h | 0/1.5 | 0/0.5 | 1080 | 3.9 | 51.74 | 12.94 | 0.33 |
| H242 | - | 20% CS | 25% HD20 | - | 23.39 | 720h | 0/2.5 | 0/1.5 | 1080 | 5.4 | 43.78 | 10.95 | 0.28 |
| H168 | 5% LS | - | 10% HD15 | 2% CF | 25.8 | 720h | 0/1 | 0/1 | 480 | 4.2 | 66.06 | 16.52 | 0.43 |
| H169 | 5% LS | - | 10% HD15 | 0.25% PS | 19.5 | 720h | 1/2 | 0/0 | 984 | 3.4 | 67.46 | 16.87 | 0.43 |
| H170 | 5% LS | - | 10% HD15 | 0.5% PS | 17.7 | 720h | 0/0 | 0/1 | 1032 | 3.7 | 67.26 | 16.81 | 0.43 |

**Table 2**

| Sample | Flake 1 Lapis Sunlight wt.-% | Flake 2 Crystal wt.-% | Flake 3 Glass flakes wt.-% | Comonomer 1 cyano-guanidine wt.-% | Rheo. additive 1 CTX wt.-% | Rheo. additive 2 CFK wt.-% | thickness [µm] | H₂S - autoclave test | CC/TT gas. | Fatigue test | EP307 wt.-% | PR722 wt.-% | Co-monomer 2 FL wt.-% |
|---|---|---|---|---|---|---|---|---|---|---|---|---|---|
| G046 | - | - | - | - | - | - | 11.96 | 720 h | 2/4 | | 79.60 | 19.90 | 0.50 |
| G014 | - | - | 10.00 | - | - | - | 23.82 | 720 h | 5/5 | | 71.64 | 19.90 | 0.45 |
| G099 | - | - | - | 10.54 | 2.24 | - | 19 | 720 h | 1/2 | | 69.43 | 17.63 | 0.43 |
| G095 | 5.00 | - | - | 2.93 | 2.31 | - | 29 | 720 h | 0/0 | | 71.45 | 17.86 | 0.45 |
| G096 | 5.00 | - | - | 5.29 | 2.25 | - | 28 | 720 h | 0/0 | | 69.62 | 17.41 | 0.44 |
| G094 | 5.00 | - | - | 10.01 | 2.13 | - | 23 | 720 h | 0/0 | | 65.96 | 16.49 | 0.41 |
| G097 | 5.00 | - | - | 14.73 | 2.01 | - | 24 | 720 h | 0/0 | | 62.29 | 15.57 | 0.39 |
| G098 | 5.00 | - | - | 19.45 | 1.89 | - | 20 | 720 h | 0/1 | | 58.63 | 14.66 | 0.37 |
| G090 | 10.00 | - | - | 2.77 | 2.19 | - | 27 | 720 h | 0/0 | | 67.69 | 16.92 | 0.42 |
| G091 | 10.00 | - | - | 5.01 | 2.13 | - | 22 | 720 h | 0/0 | | 65.96 | 16.49 | 0.41 |
| G089 | 10.00 | - | - | 9.48 | 2.02 | - | 27 | 720 h | 0/0 | ok | 62.49 | 15.62 | 0.39 |
| D092 | 10.00 | - | - | 13.95 | 1.91 | - | 26 | 720 h | 0/0 | | 59.02 | 14.75 | 0.37 |
| G093 | 10.00 | - | - | 18.43 | 1.79 | - | 28 | 720 h | 0/1 | | 55.54 | 13.89 | 0.35 |
| G035 | 20.00 | - | - | - | - | - | 15.67 | 720 h | 0/1 | | 63.68 | 15.92 | 0.45 |
| G049 | 20.00 | - | - | - | 2.00 | - | 24.25 | 720 h | 1/1 | | 62.09 | 15.52 | 0.39 |
| G048 | 20.00 | - | - | - | - | 2.30 | 26.58 | 720 h | 1/1 | | 61.85 | 15.46 | 0.39 |
| G085 | 20.00 | - | - | 2.46 | 1.96 | - | 33 | 720 h | 0/0 | | 60.17 | 15.04 | 0.38 |
| G086 | 20.00 | - | - | 4.45 | 1.89 | - | 34 | 720 h | 0/0 | | 58.63 | 14.66 | 0.37 |
| G051 | 20.00 | - | - | 10.40 | - | - | 23.19 | 720 h | 0/0 | | 55.40 | 13.85 | 0.35 |
| G055 | 20.00 | - | - | 10.16 | 1.75 | - | 29.72 | 720 h | 0/0 | ok | 54.21 | 13.55 | 0.34 |
| G053 | 20.00 | - | - | 10.12 | - | 2.02 | 35.40 | 720 h | 0/0 | | 53.97 | 13.49 | 0.34 |
| G039 | 27.40 | - | - | - | 1.83 | - | 25.66 | 720 h | 0/0 | | 56.33 | 14.08 | 0.35 |
| G037 | 23.99 | - | - | - | - | 2.22 | 29.69 | 720 h | 0/0 | | 58.74 | 14.69 | 0.37 |
| G060 | | 20.00 | | 10.40 | | | 24.42 | 720 h | 0/0 | | 55.40 | 13.85 | 0.35 |
| G064 | | 20.00 | | 10.16 | 1.75 | | 34.49 | 720 h | 0/0 | | 54.21 | 13.55 | 0.34 |
| G062 | | 20.00 | | 10.12 | | 2.02 | 30.73 | 720 h | 0/0 | | 53.97 | 13.49 | 0.34 |

**Table 3: Results of NACE Method A tests. Coated samples pass the test, uncoated samples failed < 200 h (*TS: tensile strength).**

| Sample # | TS* [MPa] | Applied stress [MPa] | Result | Classification |
|---|---|---|---|---|
| 1 | 1170 | 744 | Passed (1500 h) | Coated with G055 |
| 2 | 1170 | 744 | Passed (1500 h) | Coated with G055 |
| 3 | 1170 | 744 | Failed | Uncoated |
| 4 | 1170 | 744 | Failed | Uncoated |
| 5 | 1170 | 744 | Failed | Uncoated |
| 6 | 980 | 730 | Failed | Uncoated |
| 7 | 980 | 730 | Failed | Uncoated |
| 8 | 980 | 730 | Failed | Uncoated |
| 9 | 860 | 744 | Failed | Uncoated |
| 10 | 860 | 744 | Failed | Uncoated |
| 11 | 860 | 744 | Failed | Uncoated |

**Table 4: Results of cyclic slow strain rate tests. All the samples coated with G055 show crack propagation less than 0.1 mm, while uncoated samples show crack propagation more than 0.2 mm and also failures during tests (*TS: tensile strength)**

| Sample # | Steel TS* [MPa] | Applied delta-stress [MPa] | No. of cycles | Crack length [µm] | Classification |
|---|---|---|---|---|---|
| 5 | 1050 | 418 | 2000 | 4800 (sample failure) | Uncoated |
| 6 | 1050 | 418 | 500 | 4800 (sample failure) | Uncoated |
| 7 | 1050 | 239 | 4000 | 1050 | Uncoated |
| 8 | 1050 | 239 | 2000 | 220 | Uncoated |
| 9 | 1050 | 318 | 950 | 5000 (sample failure) | Uncoated |
| 10 | 1050 | 318 | 980 | 5000 (sample failure) | Uncoated |
| 11 | 1170 | 418 | 2000 | 80 | Coated with G055 |
| 13 | 1170 | 418 | 440 | failed during test | uncoated |

### References Cited

WO 2004/022806 A1
JP S54-011938 A
WO 2006/079643 A1
US 2009/0277625 A1
JP S62-050368 A
DE 10 2006 062 500 A1
WO 2005/044551 A1
DE 10 2009 037 323 A1
DE 102 009 031 266 A1
DE 603 19 674 T2
WO 2006/007385 A1
EP 1 718 690 A1
EP 0 387 692 A2
DE 42 12 633 A1
WO 93/21127 A1
WO 96/31572 A1
US 3,705,109
RU 2083621
G. Buxbaum and G. Pfaff Industrial inorganic pigments, 3rd ed. Wiley-VCH pages 243-248
F. J. Maile et al. Progress in Organic Coating 2005, 54, 150-163

## Claims

1. Equipment for oil and/or gas drilling, completion, storage and transportation, including pressure vessels, tools, pipes, tubes, connections and any other parts coated with a coating as a barrier against gaseous or liquid corrosive environments comprising
a) a cured binder comprising at least one cured cross-linkable resin chosen from polyepoxides, phenolic resin, phenoxy resin, aminoplast resin, polyurethane resin derived from polyisocyanates and/or acrylic resin, wherein the resin comprises at least one polar group comprising hetero atoms selected from the group including nitrogen, oxygen, sulfur and phosphorus;
b) at least one type of hydrophilic flakes with an aspect ratio of more than 10, wherein the surface of the flakes at least partially comprises a metal oxide,
wherein the coating further comprises a fluorine-containing polymer oroligomer.

2. Equipment according to claim 1, wherein the metal oxide is a transition metal oxide.

3. Equipment according to claim 2, wherein the transition metal oxide is selected from TiO₂, Fe₂O₃, ZrO₂ or mixtures thereof.

4. Equipment according to one of the claims 1 to 3, wherein the hydrophilic flakes are obtained by a web coating process and then coated by precipitation.

5. Equipment according to one of the claims 1 to 4, wherein the cured cross-linkable resin is an acrylic resin.

6. Equipment according to claim 1 to 5, wherein the polar group is selected from the group including hydroxyl, alkoxysilyl, epoxy, carboxyl, ester, carbonyl, oxycar- bonyl, sulfide, disulfide, sulfonyl, sulfinyl, thiol, thiocarbonyl, imino, amino, nitrile, ammonium, imide, amide, hydrazo, azo, diazo, cyanide, guanidine, oxygen-containing heterocyclic, nitrogen-containing heterocyclic, sulfur-containing heterocyclic groups.

7. Equipment according to one of the claims 1 to 4 or 6, wherein the crosslinkable resin is from the class of epoxy resins, phenol resins, phenoxy resins or mixtures thereof.

8. Equipment according to one of the claims 1 to 7, wherein the composition further comprises inorganic particles.

9. Equipment according to claim 8, wherein the inorganic particles are hard particles.

10. Equipment according to claim 9, wherein the hard particles are selected from particles consisting of at least one of oxides, nitrides, carbides, carbonitrides, silicides and borides.

11. quipment according to claim 10, wherein the hard particles are selected from particles consisting of at least one of boron carbide, silicon carbide and/or silicon nitride.

12. Equipment according to one of the claims 1 to 1211, wherein the cured binder is further cross-linked by a cross-linking co-monomer, oligomer or polymer.

13. Equipment according to claim 12, wherein the cross-linking co-monomer is selected from the group comprising a co-monomer comprising at least one cyano group, a functionalized perfluoropolyether and/or mixtures therefrom.

14. Equipment according to claim 12, wherein the co-monomer comprising at least one cyano group is a compound derived from cyanoguanidines.

15. Equipment according to one of the claim 1 to 1514, wherein the coating further comprises at least one rheology additive.

16. Equipment according to one of the claims 1 to 15, wherein the coating comprises 40 to 95 wt.-% of binder.

17. Equipment according to claim 16, wherein the binder consists of a mixture of epoxy resins and phenoxy resins used with a ratio 10:1 to 1:1 (in wt.-%).

18. Use of a substrate coated with a coating according to one of the claims 1 to 17 for oil and/or gas drilling, completion, storage and transportation, including pressure vessels, tools, pipes, tubes, connections and any other parts.

## Patentansprüche

1. Ausrüstung für Öl- und/oder Gasbohrung, Completion, Lagerung und Transport, einschließlich Druckbehältern, Werkzeugen, Rohren, Schläuchen, Verbindungen und jeglicher anderen Teile, die mit einer Beschichtung als Barriere gegen gasförmige oder flüssige korrosive Umgebungen beschichtet sind, umfassend
a) ein gehärtetes Bindemittel, das wenigstens ein gehärtetes vernetzbares Harz umfasst, das aus Polyepoxiden, Phenolharz, Phenoxyharz, Aminoplastharz, Polyurethanharz das aus Polyisocyanaten gewonnen wird und/oder Acrylharz gewählt ist, wobei das Harz wenigstens eine Heteroatome, die aus der Stickstoff, Sauerstoff, Schwefel und Phosphor enthaltenden Gruppe ausgewählt sind, umfassende polare Gruppe umfasst;
b) wenigstens einen Typ hydrophiler Flocken mit einem Aspektverhältnis von mehr als 10, wobei die Oberfläche der Flocken wenigstens teilweise ein Metalloxid umfasst,
wobei die Beschichtung ferner ein fluorhaltiges Polymer oder Oligomer umfasst.

2. Ausrüstung nach Anspruch 1, wobei es sich bei dem Metalloxid um ein Übergangsmetalloxid handelt.

3. Ausrüstung nach Anspruch 2, wobei das Übergangsmetalloxid aus TiO₂, Fe₂O₃, ZrO₂ oder Gemischen davon ausgewählt ist.

4. Ausrüstung nach einem der Ansprüche 1 bis 3, wobei die hydrophilen Flocken mit einem Bahnbeschichtungsverfahren erhalten und dann durch Fällung beschichtet werden.

5. Ausrüstung nach einem der Ansprüche 1 bis 4, wobei es sich bei dem gehärteten vernetzbaren Harz um ein Acrylharz handelt.

6. Ausrüstung nach Anspruch 1 bis 5, wobei die polare Gruppe aus der Hydroxyl, Alkoxysilyl, Epoxid, Carboxyl, Ester, Carbonyl, Oxycarbonyl, Sulfid, Disulfid, Sulfonyl, Sulfinyl, Thiol, Thiocarbonyl, Imino, Amino, Nitril, Ammonium, Imid, Amid, Hydrazo, Azo, Diazo, Cyanid, Guanidin, sauerstoffhaltige heterocyclische, stickstoffhaltige heterocyclische, schwefelhaltige heterocyclische Gruppen enthaltenden Gruppe ausgewählt ist.

7. Ausrüstung nach einem der Ansprüche 1 bis 4 oder 6, wobei das vernetzbare Harz aus der Klasse der Epoxidharze, Phenolharze, Phenoxyharze oder Gemischen davon stammt.

8. Ausrüstung nach einem der Ansprüche 1 bis 7, wobei die Zusammensetzung ferner anorganische Teilchen umfasst.

9. Ausrüstung nach Anspruch 8, wobei es sich bei den anorganischen Teilchen um harte Teilchen handelt.

10. Ausrüstung nach Anspruch 9, wobei die harten Teilchen aus Teilchen ausgewählt sind, die aus wenigstens einem von Oxiden, Nitriden, Carbiden, Carbonitriden, Siliciden und Boriden bestehen.

11. Ausrüstung nach Anspruch 10, wobei die harten Teilchen aus Teilchen ausgewählt sind, die aus wenigstens einem von Borcarbid, Siliciumcarbid und/oder Siliciumnitrid bestehen.

12. Ausrüstung nach einem der Ansprüche 1 bis 11, wobei das gehärtete Bindemittel weiter durch ein Vernetzungscomonomer, -oligomer oder -polymer vernetzt ist.

13. Ausrüstung nach Anspruch 12, wobei das Vernetzungscomonomer aus der ein wenigstens eine Cyanogruppe umfassendes Comonomer, einen funktionalisierten Perfluorpolyether und/oder Gemische davon umfassenden Gruppe ausgewählt ist.

14. Ausrüstung nach Anspruch 12, wobei es sich bei dem wenigstens eine Cyanogruppe umfassenden Comonomer um eine von Cyanoguanidinen abgeleitete Verbindung handelt.

15. Ausrüstung nach einem der Ansprüche 1 bis 14, wobei die Beschichtung ferner wenigstens ein Rheologieadditiv umfasst.

16. Ausrüstung nach einem der Ansprüche 1 bis 15, wobei die Beschichtung 40 bis 95 Gew.- % Bindemittel umfasst.

17. Ausrüstung nach Anspruch 16, wobei das Bindemittel aus einem Gemisch von Epoxidharzen und Phenoxyharzen, verwendet im Verhältnis 10:1 bis 1:1 (in Gew.-%), besteht.

18. Verwendung eines mit einer Beschichtung nach einem der Ansprüche 1 bis 17 beschichteten Substrats für Öl- und/oder Gasbohrung, Completion, Lagerung und Transport, einschließlich Druckbehältern, Werkzeugen, Rohren, Schläuchen, Verbindungen und jeglicher anderen Teile.

## Revendications

1. Équipement destiné au forage, au conditionnement de puits, au stockage et au transport de pétrole et/ou de gaz, notamment des réservoirs sous pression, des outils, des tuyaux, des tubes, des raccords et toutes autres pièces recouvertes d'un revêtement agissant comme une barrière contre les environnements gazeux ou liquides corrosifs comprenant
a) un liant durci comprenant au moins une résine réticulable durcie choisie parmi les polyépoxydes, la résine phénolique, la résine phénoxy, la résine aminoplaste, la résine de polyuréthane dérivée des polyisocyanates et/ou la résine acrylique, la résine comprenant au moins un groupe polaire comprenant des hétéroatomes choisis dans le groupe comportant l'azote, l'oxygène, le soufre et le phosphore ;
b) au moins un type de paillettes hydrophiles avec un rapport de forme supérieur à 10, la surface des paillettes comprenant au moins partiellement un oxyde métallique,
dans lequel le revêtement comprend également un polymère ou oligomère contenant du fluor.

2. Équipement selon la revendication 1, dans lequel l'oxyde métallique est un oxyde de métal de transition.

3. Équipement selon la revendication 2, dans lequel l'oxyde de métal de transition est choisi parmi TiO₂, Fe₂O₃, ZrO₂ ou les mélanges de ceux-ci.

4. Équipement selon une des revendications 1 à 3, dans lequel les paillettes hydrophiles sont obtenues par un procédé d'induction en continu puis recouvertes par précipitation.

5. Équipement selon une des revendications 1 à 4, dans lequel la résine réticulable durcie est une résine acrylique.

6. Équipement selon la revendication 1 à 5, dans lequel le groupe polaire est choisi dans le groupe comportant les groupes hydroxyle, alcoxysilyle, époxy, carboxyle, ester, carbonyle, oxycarbonyle, sulfure, disulfure, sulfonyle, sulfinyle, thiol, thiocarbonyle, imino, amino, nitrile, ammonium, imide, amide, hydrazo, azo, diazo, cyanure, guanidine, hétérocycliques contenant de l'oxygène, hétérocycliques contenant de l'azote, hétérocycliques contenant du soufre.

7. Équipement selon une des revendications 1 à 4 ou 6, dans lequel la résine réticulable est de la classe des résines époxy, des résines phénoliques, des résines phénoxy ou des mélanges de celles-ci.

8. Équipement selon une des revendications 1 à 7, dans lequel la composition comprend également des particules inorganiques.

9. Équipement selon la revendication 8, dans lequel les particules inorganiques sont des particules dures.

10. Équipement selon la revendication 9, dans lequel les particules dures sont choisies parmi les particules constituées d'au moins un composé parmi les oxydes, les nitrures, les carbures, les carbonitrures, les siliciures et les borures.

11. Équipement selon la revendication 10, dans lequel les particules dures sont choisies parmi les particules constituées d'au moins un composé parmi le carbure de bore, le carbure de silicium et/ou le nitrure de silicium.

12. Équipement selon une des revendications 1 à 11, dans lequel le liant durci est en outre réticulé par un comonomère, oligomère ou polymère de réticulation.

13. Équipement selon la revendication 12, dans lequel le comonomère de réticulation est choisi dans le groupe comprenant un comonomère comprenant au moins un groupe cyano, un perfluoropolyéther fonctionnalisé et/ou les mélanges de ceux-ci.

14. Équipement selon la revendication 12, dans lequel le comonomère comprenant au moins un groupe cyano est un composé dérivé de cyanoguanidines.

15. Équipement selon une des revendications 1 à 14, dans lequel le revêtement comprend également au moins un additif rhéologique.

16. Équipement selon une des revendications 1 à 15, dans lequel le revêtement comprend 40 à 95 % en poids de liant.

17. Équipement selon la revendication 16, dans lequel le liant consiste en un mélange de résines époxy et de résine phénoxy utilisé dans un rapport de 10:1 à 1:1 (en pourcentage pondéral).

18. Utilisation d'un substrat recouvert d'un revêtement selon une des revendications 1 à 17 pour le forage, le conditionnement de puits, le stockage et le transport de pétrole et/ou de gaz, notamment des réservoirs sous pression, des outils, des tuyaux, des tubes, des raccords et toutes autres pièces.
